(19) Europäisches Patentamt
European Patent Office
Office européen des brevets

(11) **EP 4 050 839 A1**

(12) **EUROPÄISCHE PATENTANMELDUNG**

(43) Veröffentlichungstag:
**31.08.2022 Patentblatt 2022/35**

(21) Anmeldenummer: **21159040.1**

(22) Anmeldetag: **24.02.2021**

(51) Internationale Patentklassifikation (IPC):
**H04L 9/08** (2006.01)    **H04L 9/30** (2006.01)

(52) Gemeinsame Patentklassifikation (CPC):
**H04L 9/0844; H04L 9/3066**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Böffgen, Pascale**
  **81247 München (DE)**
• **De Santis, Fabrizio**
  **80634 München (DE)**

(54) **VERFAHREN ZUR VEREINBARUNG EINES GEMEINSAMEN KRYPTOGRAPHISCHEN SCHLÜSSELS UND VERFAHREN ZUR VERSCHLÜSSELTEN KOMMUNIKATION SOWIE COMPUTERPROGRAMMPRODUKT UND GERÄT**

(57) Bei dem Verfahren zur Vereinbarung eines gemeinsamen kryptographischen Schlüssels mit einem Kommunikationspartner mittels mindestens eines öffentlichen Kanals wird ein erster Punkt einer ersten elliptischen Kurve gewählt und an den Kommunikationspartner mittels des öffentlichen Kanals gesendet und ein zweiter Punkt der ersten elliptischen Kurve vom Kommunikationspartner empfangen, wobei der gemeinsame Schlüssel mittels einer zu einer gemeinsamen isomorphen Abbildung einer zweiten elliptischen Kurve auf die erste elliptische Kurve nicht-trivialen inversen gemeinsamen Abbildung des zweiten Punkts der ersten elliptischen Kurve bestimmt wird.

FIG 1

EP 4 050 839 A1

**Beschreibung**

Die Erfindung betrifft ein Verfahren zur Vereinbarung eines gemeinsamen kryptographischen Schlüssels und ein Verfahren zur verschlüsselten Kommunikation. Die Erfindung betrifft zudem ein Computerprogrammprodukt und ein Gerät, welche jeweils zur Ausführung der vorgenannten Verfahren ausgebildet und eingerichtet sind.

Die Sicherheit aktueller asymmetrischer Kryptographie beruht unter anderem auf der Schwierigkeit, bestimmte mathematische Probleme zu lösen, etwa das Faktorisierungsproblem oder das Problem der Berechnung des diskreten Logarithmus auf elliptischen Kurven. Diese Verfahren werden in Zukunft mit leistungsfähigen Quantencomputern angreifbar sein. Daher werden derzeit neue kryptographische Verfahren der Post-Quantum-Kryptographie entwickelt, d. h. Verfahren, die aus heutiger Sicht sicher gegen zukünftige leistungsfähige Quantencomputer sein werden.

Insbesondere Schlüsselaustauschverfahren wie das auf dem Problem der Berechnung des diskreten Logarithmus beruhende Elliptic-Curve-Diffie-Hellman-Schlüsselaustauschverfahren (ECDH) sind durch Quantencomputer gefährdet.

Allerdings sind bislang noch keine gegenüber Quantencomputer-Angriffen resistenten Verfahren standardisiert oder ihre Sicherheit abschließend geklärt worden, sodass eine sichere Post-Quantum-Kryptographie noch nicht verlässlich zur Verfügung steht.

Folglich sind Krypto-Systeme, die wie ECDH auf elliptischen Kurven basieren, im Falle von möglichen künftigen Quantencomputer-Angriffen nicht hinreichend sicher.

Es ist daher eine Aufgabe der Erfindung, ein Verfahren zur Vereinbarung eines kryptographischen Schlüssels anzugeben, welches mit einer höheren Sicherheit gegenüber Quantencomputer-Angriffen ausführbar ist als bekannte Verfahren zur Vereinbarung kryptographischer Schlüssel. Ferner ist es Aufgabe der Erfindung, ein Verfahren zur verschlüsselten Kommunikation anzugeben, welches mit höherer Sicherheit gegenüber Quantencomputer-Angriffen ausführbar ist. Zudem ist es Aufgabe der Erfindung, ein verbessertes Computerprogrammprodukt und ein verbessertes Gerät anzugeben, mit welchem die vorgenannten Verfahren ausführbar sind.

Diese Aufgaben der Erfindung werden mit einem Verfahren zur Vereinbarung eines kryptographischen Schlüssels mittels eines öffentlichen Kanals mit den in Anspruch 1 angegebenen Merkmalen und mit einem Verfahren zur verschlüsselten Kommunikation mit den in Anspruch 7 angegebenen Merkmalen sowie mit einem Computerprogrammprodukt mit den in Anspruch 9 angegebenen Merkmalen und mit einem Gerät mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Im Folgenden werden die Begriffe "Isomorphie" und "isomorphe Abbildung" synonym verwendet. Für eine Isomorphie $\Phi$ von einer elliptischen Kurve F auf eine elliptische Kurve F' und einen beliebigen Punkt R auf der elliptischen Kurve F bezeichnen wir $\Phi(R)$ als das Bild des Punktes R unter der Isomorphie $\Phi$ oder als das Bild unter der Isomorphie $\Phi$ des Punktes R.

Bei dem erfindungsgemäßen Verfahren zur Vereinbarung eines gemeinsamen kryptographischen Schlüssels mit einem Kommunikationspartner mittels mindestens eines öffentlichen Kanals wird ein erster Punkt einer ersten elliptischen Kurve gewählt und an den Kommunikationspartner mittels des mindestens einen öffentlichen Kanals gesendet und es wird ein zweiter Punkt der ersten elliptischen Kurve des Kommunikationspartners empfangen, wobei der gemeinsame Schlüssel mittels einer inversen Abbildung, die eine inverse Abbildung zu einer gemeinsamen isomorphen Abbildung einer zweiten elliptischen Kurve auf die erste elliptische Kurve ist, angewendet auf den zweiten Punkt der ersten elliptischen Kurve, bestimmt wird.

Soweit in der vorliegenden Anmeldung von einer elliptischen Kurve die Rede ist, so ist hierunter in an sich bekannter Weise eine elliptische Kurve über einem endlichen Körper zu verstehen. Soweit in der vorliegenden Anmeldung von einem Faktor zur Vervielfachung eines Punkts die Rede ist, so handelt es sich um einen diskreten Logarithmus in der Gruppe der Punkte der elliptischen Kurve. Die Vervielfachung des Punktes der elliptischen Kurve resultiert in einem Vielfachen des Punkts der elliptischen Kurve. Ein ganzzahliges Vielfaches des Punkts der elliptischen Kurve bildet ebenfalls einen Punkt der elliptischen Kurve. Die Schreibweise für ein ganzzahliges Vielfaches eines Punkts R einer elliptischen Kurve ist entweder IR oder I$\bullet$R, wobei I die ganze Zahl ist. Man spricht auch von der "skalaren Multiplikation" oder "Skalarmultiplikation" IR bzw. I$\bullet$R.

Soweit in der vorliegenden Anmeldung von einer Vereinbarung eines kryptographischen Schlüssels die Rede ist, so ist darunter insbesondere ein sicherer Schlüsselaustausch über den öffentlichen Kanal zu verstehen, d. h. ein Schlüsselaustausch, bei welchem selbst bei Abhören des öffentlichen Kanals die Sicherheit des kryptographischen Schlüssels nicht oder zumindest ohne Heranziehung von Quantencomputern nicht effektiv kompromittiert ist.

Mittels des erfindungsgemäßen Verfahrens wird nicht notwendigerweise ein Punkt der ersten elliptischen Kurve für die Konstruktion eines kryptographischen Schlüssels herangezogen, sondern das erfindungsgemäße Verfahren erlaubt mittels der inversen Abbildung die Vereinbarung eines Punkts auf einer von der ersten elliptischen Kurve verschiedenen zweiten elliptischen Kurve als kryptographischen Schlüssel. Die zweite elliptische Kurve kann öffentlich bekannt sein. Die erste elliptische Kurve lässt sich jedoch von Angreifern nicht ohne Weiteres erschließen, da über den öffentlichen Kanal lediglich ein erster und ein zweiter Punkt der ersten elliptischen Kurve ausgetauscht werden.

Erster und zweiter Punkt der ersten elliptischen Kurve werden in einer bevorzugten Weiterbildung der Erfindung nicht vollständig über den öffentlichen Kanal ausgetauscht, sondern es wird für den ersten und den zweiten Punkt eine an sich bekannte sogenannte Punktkompression angewendet. Durch diese Punktkompression lassen sich aus den über den öffentlichen Kanal ausgetauschten Informationen nicht oder nur deutlich erschwert die Parameter der ersten elliptischen Kurve rekonstruieren. Somit ist ein Angriff selbst mit Quantencomputern auf das erfindungsgemäße Verfahren zur Vereinbarung eines kryptographischen Schlüssels gegenüber Angriffen auf bekannte Verfahren wie den ECDH deutlich erschwert.

Das erfindungsgemäße Verfahren lässt sich in Produkten zudem besonders leicht umsetzen. In der Produktentwicklung müssen lediglich die isomorphe Abbildung sowie die inverse Abbildung zusätzlich zu einer bestehenden ECDH-Implementierung implementiert werden, d. h. die erforderlichen Anpassungen gegenüber Implementierungen des ECDH sind sehr gering.

Unter einem öffentlichen Kanal im Sinne dieser Erfindung ist ein Kanal zu verstehen, bei welchem mittels des Kanals gesendete und/oder empfangene Informationen nicht geheim gehalten werden. Durch die bei dem erfindungsgemäßen Verfahren über einen öffentlichen Kanal übertragenen, d. h. gesendeten und/oder empfangenen, Informationen wird die Sicherheit des erfindungsgemäßen Verfahrens auch dann, wenn die über den Kanal übertragenen, d. h. gesendeten und/oder empfangenen, Informationen abgehört werden, nicht, zumindest nicht ohne Heranziehung von Quantencomputern, kompromittiert.

Unter einer Information oder Größe, welche in der vorliegenden Erfindung als "geheim" bezeichnet wird, ist eine solche Information oder Größe zu verstehen, welche bei dem erfindungsgemäßen Verfahren nicht über den öffentlichen Kanal übertragen wird, da die geheime Information oder Größe die Sicherheit des erfindungsgemäßen Verfahrens beeinträchtigen würde oder zumindest könnte.

Im Sinne der vorliegenden Erfindung sind vorzugsweise die isomorphe Abbildung und die inverse Abbildung bei der Ausführung des Verfahrens und zweckmäßig auch bei dem Kommunikationspartner geheim, d. h. die isomorphe Abbildung und die inverse Abbildung werden bei dem erfindungsgemäßen Verfahren nicht über den öffentlichen Kanal übertragen, sondern zwischen den Kommunikationspartnern entweder vorab vereinbart oder über einen weiteren, sicheren, Kanal ausgetauscht.

Zweckmäßig wird bei dem erfindungsgemäßen Verfahren der erste Punkt einer Punktkompression unterzogen, bevor er gesendet wird, und/oder eine Punktkompression des zweiten Punkts rückgängig gemacht, nachdem er empfangen wird. Im Rahmen der vorliegenden Erfindung ist besonders bevorzugt also unter einem *"Senden eines Punkts"* auch ein Senden einer vom Punkt abgeleiteten und den Punkt identifizierenden Information, insbesondere einer Punktkompression des Punkts, zu verstehen. Unter einem *"Empfangen eines Punkts"* ist besonders bevorzugt auch ein Empfangen einer vom Punkt abgeleiteten und den Punkt, vorzugsweise eindeutig, identifizierenden Information zu verstehen, insbesondere ein Empfangen einer Punktkompression des Punkts.

In dieser Weiterbildung der Erfindung besteht bei einer Übertragung der einer Punktkompression unterzogenen Punkte ein geringeres Risiko, dass die erste elliptische Kurve aus den übertragenen Informationen wie der Punktkompression rekonstruiert werden kann.

Insbesondere werden bei dem erfindungsgemäßen Verfahren die erste elliptische Kurve und/oder die Abbildung der ersten elliptischen Kurve auf die zweite elliptische Kurve und/oder die Abbildung der zweiten elliptischen Kurve auf die erste elliptische Kurve geheim gehalten und insbesondere nicht über den öffentlichen Kanal kommuniziert, also gesendet oder empfangen.

Vorzugsweise wird bei dem erfindungsgemäßen Verfahren eine isomorphe Abbildung herangezogen, welche die zweite elliptische Kurve auf die erste elliptische Kurve nicht-trivial, d. h. nicht-identisch, abbildet, und wobei die zur isomorphen Abbildung inverse Abbildung die erste elliptische Kurve nicht-trivial, d. h. nicht-identisch, auf die zweite elliptische Kurve abbildet.

Bevorzugt ist bei dem erfindungsgemäßen Verfahren der erste Punkt das Bild unter der isomorphen Abbildung eines mit einem ersten geheimen Faktor gebildeten ersten Vielfachen eines gemeinsamen Punkts der zweiten elliptischen Kurve und der zweite Punkt ist bevorzugt das Bild unter der isomorphen Abbildung eines mit einem zweiten geheimen Faktor gebildeten zweiten Vielfachen des gemeinsamen Punkts.

In dieser Weiterbildung der Erfindung resultiert die Anwendung der isomorphen Abbildung in einem ersten und zweiten Punkt, welche auf der ersten elliptischen Kurve liegen.

In einer bevorzugten Weiterbildung des erfindungsgemäßen Verfahrens ist der erste Punkt ein mit einem ersten geheimen Faktor gebildetes erstes Vielfaches des Bildes unter einer isomorphen Abbildung des gemeinsamen Punkts der zweiten elliptischen Kurve und der zweite Punkt ist ein mit einem zweiten geheimen Faktor gebildetes Vielfaches des Bildes unter einer isomorphen Abbildung des gemeinsamen Punkts der zweiten elliptischen Kurve.

Auch in dieser Weiterbildung der Erfindung liegen erster und zweiter Punkt auf der ersten elliptischen Kurve. In dieser Weiterbildung des erfindungsgemäßen Verfahrens kann zudem direkt auf der ersten elliptischen Kurve gerechnet werden, was zu einem Geschwindigkeitsvorteil gegenüber der Berechnung auf der zweiten elliptischen Kurve führen kann, wenn die erste elliptische Kurve geeignet gewählt wird.

Vorzugsweise wird bei dem erfindungsgemäßen Verfahren der gemeinsame kryptographische Schlüssel mittels einer Multiplikation des Bildes unter der inversen Abbildung des zweiten Punkts mit dem ersten geheimen Faktor bestimmt. Zweckmäßig wird dazu der bei dem erfindungsgemäßen Verfahren gewählte erste geheime Faktor geschützt gespeichert und zur Bestimmung des gemeinsamen kryptographischen Schlüssels abgerufen. Grundsätzlich kann der erste geheime Faktor auch in einem geschützten Arbeitsspeicher präsent gehalten und herangezogen werden.

Bei dem erfindungsgemäßen Verfahren zur verschlüsselten Kommunikation wird ein gemeinsamer kryptographischer Schlüssel mittels eines Verfahren zur Vereinbarung eines gemeinsamen kryptographischen Schlüssels wie vorhergehend beschrieben vereinbart und die Kommunikation wird mittels des vereinbarten kryptographischen Schlüssels oder eines Schlüssels, der aus dem gemeinsam vereinbarten Schlüssel in an sich bekannter Weise abgeleitet wurde, verschlüsselt und/oder die verschlüsselte Kommunikation wird mittels des vereinbarten kryptographischen Schlüssels oder eines Schlüssels, der aus dem gemeinsam vereinbarten Schlüssel in an sich bekannter Weise abgeleitet wurde, entschlüsselt.

Im Folgenden wird beispielhaft immer mit dem vereinbarten kryptographischen Schlüssel verschlüsselt und/oder entschlüsselt. Dabei ist immer auch miteingeschlossen, dass der Schlüssel zum Verschlüsseln und/oder Entschlüsseln auch aus dem vereinbarten Schlüssel abgeleitet werden kann. Unter einem Verschlüsseln und/oder Entschlüsseln mit dem vereinbarten kryptographischen Schlüssel ist also auch das Verschlüsseln und/oder Entschlüsseln mit einem vom vereinbarten kryptographischen Schlüssel abgeleiteten Schlüssel zu verstehen.

Zweckmäßig sind das erfindungsgemäße Verfahren zur Vereinbarung eines gemeinsamen kryptographischen Schlüssels und das erfindungsgemäße Verfahren zur verschlüsselten Kommunikation jeweils computerimplementiert. In dieser Weiterbildung des erfindungsgemäßen Verfahrens lassen sich in an sich bekannter Weise kryptographische Schlüssel generieren, welche effizient mit zum Anmeldezeitpunkt gängigen Computern vereinbart werden können und welche mittels klassischer, d. h. nicht die Gesetzmäßigkeiten der Quanteninformationsverarbeitung nutzender, gängiger Computer nicht oder nicht hinreichend effizient ohne Kenntnis des ersten oder zweiten geheimen Faktors rekonstruiert werden können.

Das erfindungsgemäße Computerprogrammprodukt ist ausgebildet zur Ausführung eines erfindungsgemäßen Verfahrens zur verschlüsselten Kommunikation und/oder zur Ausführung eines erfindungsgemäßen Verfahrens zur Vereinbarung eines gemeinsamen kryptographischen Schlüssels wie vorhergehend beschrieben.

Das erfindungsgemäße Gerät ist insbesondere ein IoT-Gerät und/oder ein Feldgerät und/oder ein Cloudcontroller und ist zur Ausführung eines erfindungsgemäßen Verfahrens zur verschlüsselten Kommunikation und/oder zur Ausführung eines erfindungsgemäßen Verfahrens zur Vereinbarung eines gemeinsamen kryptographischen Schlüssels wie vorhergehend beschrieben eingerichtet und ausgebildet. Alternativ und ebenfalls bevorzugt kann das Gerät ein, vorzugsweise mobiler, Rechner, etwa ein Smartphone, oder ein sonstiges zum Austausch vertraulicher Daten eingerichtetes Gerät sein.

Das erfindungsgemäße Gerät weist vorzugsweise eine Punktberechnungseinrichtung, welche zur Berechnung des ersten Punkts ausgebildet ist, sowie eine Empfangseinrichtung, welche zum Empfang des zweiten Punkts ausgebildet ist, und zudem eine Schlüsselbestimmungseinrichtung, welche zur Bestimmung des gemeinsamen kryptographischen Schlüssels mittels des zweiten Punkts ausgebildet ist, auf. Zudem weist das erfindungsgemäße Gerät eine Sendeeinrichtung zum Senden des ersten Punkts auf.

Das erfindungsgemäße Gerät weist bevorzugt zudem eine Kommunikationseinrichtung auf, welche zum Senden und/oder zum Empfang von verschlüsselten Nachrichten ausgebildet ist und welche zur Ver- und/oder Entschlüsselung mit dem gemeinsamen kryptographischen Schlüssel ausgebildet ist.

Nachfolgend wird die Erfindung anhand in der Zeichnung dargestellter Ausführungsbeispiele näher erläutert. Es zeigen:

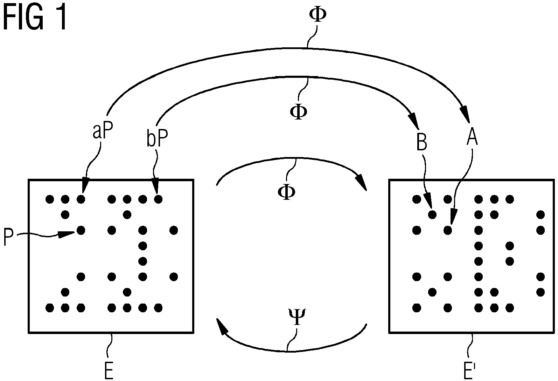

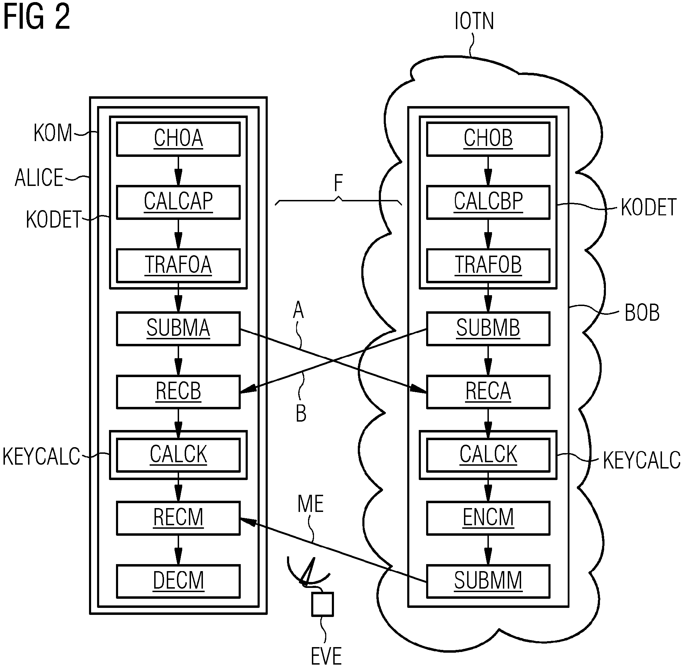

Fig. 1      eine erste und eine zweite elliptische Kurve sowie einen gemeinsamen Punkt und einen ersten und einen zweiten Punkt, welche in einer in Fig. 2 dargestellten ersten Ausführungsform des erfindungsgemäßen Verfahrens zur Vereinbarung eines gemeinsamen kryptographischen Schlüssels herangezogen werden, schematisch in einer Prinzipskizze,

Fig. 2      eine schematische Darstellung des erfindungsgemäßen Verfahrens zur Vereinbarung eines gemeinsamen kryptographischen Schlüssels sowie eines erfindungsgemäßen Verfahrens zur verschlüsselten Kommunikation heranziehend die erste und zweite elliptische Kurve und den ersten und den zweiten Punkt gem. Fig. 1 schematisch in einer Prinzipskizze,

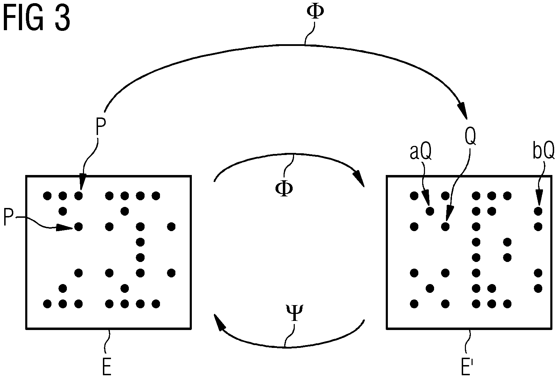

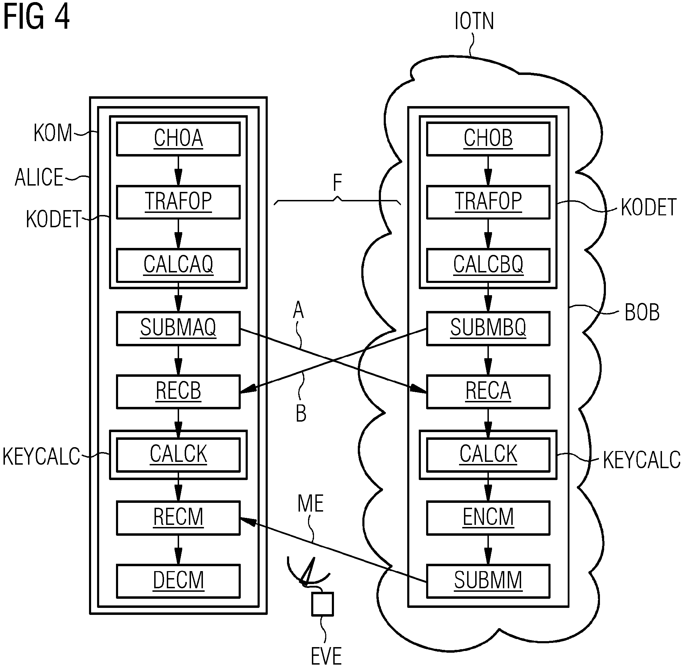

Fig. 3      die erste und eine zweite elliptische Kurve gem. Fig. 1 sowie einen gemeinsamen Punkt und einen abweichend berechneten ersten und einen abweichend berechneten zweiten gesendeten Punkt, welche in einem in Fig. 4 dargestellten weiteren Ausführungsbeispiel des erfindungsgemäßen Verfahrens zur Vereinbarung eines gemeinsamen kryptographischen Schlüssels herangezogen werden, schematisch in einer Prinzipskizze, sowie

Fig. 4    eine schematische Darstellung des weiteren Ausführungsbeispiels des erfindungsgemäßen Verfahrens zur Vereinbarung eines gemeinsamen kryptographischen Schlüssels sowie eines weiteren Ausführungsbeispiels des erfindungsgemäßen Verfahrens zur verschlüsselten Kommunikation heranziehend die erste und zweite elliptische Kurve und den abweichend berechneten ersten und den abweichend berechneten zweiten Punkt gem. Fig. 3 schematisch in einer Prinzipskizze.

Bei dem erfindungsgemäßen Verfahren werden eine erste elliptische Kurve E' sowie eine zweite elliptische Kurve E herangezogen. Die erste elliptische Kurve E' geht aus der zweiten elliptischen Kurve E als Bild unter der isomorphen Abbildung Φ der zweiten elliptischen Kurve E hervor. Zu der isomorphen Abbildung Φ der zweiten elliptischen Kurve E auf die erste elliptische Kurve E' existiert zudem eine inverse Abbildung Ψ, welche die erste elliptische Kurve E' auf die zweite elliptische Kurve E abbildet.

Wie in Fig. 2 dargestellt wird das erfindungsgemäße Verfahren in dieser ersten Ausführungsform von einem Feldgerät ALICE ausgeführt, welches mit einem IoT-Netzwerk IOTN in Form eines Cloudnetzwerks verbunden ist. Das Feldgerät ALICE vereinbart einen gemeinsamen kryptographischen Schlüssel mit einem Cloudcontroller BOB. Grundsätzlich kann das erfindungsgemäße Verfahren in weiteren, nicht eigens dargestellten Ausführungsbeispielen auch von sonstigen Geräten, etwa mobilen Computern oder Mobilfunkgeräten wie insbesondere Smartphones, ausgeführt werden.

In einer ersten Ausführungsform des erfindungsgemäßen Verfahrens zur Vereinbarung eines gemeinsamen kryptographischen Schlüssels mit einem Kommunikationspartner wird vom Feldgerät ALICE mit dem Kommunikationspartner, hier dem Cloudcontroller BOB, vorab die vorhergehend beschriebene elliptische Kurve E, die isomorphe Abbildung Φ und - aus der isomorphen Abbildung folgend - zugleich auch die inverse Abbildung Ψ vereinbart. Zudem wird mit dem Kommunikationspartner vorab ein gemeinsamer Punkt P der elliptischen Kurve E vereinbart.

Zum Austausch von Information zwischen dem Feldgerät ALICE und dem Cloudcontroller BOB sind Feldgerät ALICE und Cloudcontroller BOB mittels eines Funkkanals F verbunden, der nicht grundsätzlich vor fremden Lauschangriffen geschützt ausgebildet ist, sondern der von Lauschern EVE abgehört werden kann.

Zur Vereinbarung eines gemeinsamen kryptographischen Schlüssels wählt das Feldgerät ALICE in einem ersten Schritt CHOA zunächst eine möglichst zufällige und hinreichend große erste ganze Zahl a aus, mit welcher es den gemeinsamen Punkt P der zweiten elliptischen Kurve E in einem Verfahrensschritt CALCAP vervielfacht. Das Feldgerät ALICE hält die erste ganze Zahl a geheim und speichert sie lediglich intern in einem nicht eigens dargestellten Datenspeicher des Feldgeräts ALICE. Dieses erste Vielfache a●P des gemeinsamen Punkts P bildet seinerseits einen Punkt der zweiten elliptischen Kurve E. In einem vergleichbaren Schritt CHOB wählt der Cloudcontroller BOB ebenfalls eine zufällige und hinreichend große zweite ganze Zahl b aus, mit welcher er den gemeinsamen Punkt P der zweiten elliptischen Kurve E in einem Verfahrensschritt CALCBP vervielfacht. Der Cloudcontroller BOB hält die zweite ganze Zahl b geheim und speichert sie in einem Datenspeicher des Cloudcontrollers BOB. Auch dieses zweite Vielfache b●P bildet seinerseits einen Punkt der zweiten elliptischen Kurve E.

Das Feldgerät ALICE transformiert mit der isomorphen Abbildung Φ in einem Verfahrensschritt TRAFOA das erste Vielfache a●P auf die erste elliptische Kurve E' und erhält somit einen ersten zum Senden vorgesehenen Punkt A.

Der Cloudcontroller BOB transformiert mit der isomorphen Abbildung Φ in einem Verfahrensschritt TRAFOB das zweite Vielfache b●P auf die erste elliptische Kurve E' und erhält somit einen zweiten zum Senden vorgesehenen Punkt B.

Das Feldgerät ALICE weist zur Durchführung der Verfahrensschritte CHOA, CALCAP und TRAFOA eine Punktbestimmungseinrichtung KODET auf, welche computerimplementiert und softwaregesteuert den Punkt A ermittelt. Ebenso weist der Cloudcontroller BOB zur Durchführung der Verfahrensschritte CHOB, CALCBP und TRAFOB eine Punktbestimmungseinrichtung KODET auf, welche computerimplementiert und softwaregesteuert den Punkt B ermittelt.

Das Feldgerät ALICE übersendet mittels einer Funkeinrichtung in einem Verfahrensschritt SUBMA den Punkt A an den Cloudcontroller BOB, der den Punkt A in einem Verfahrensschritt RECA mit einer weiteren Funkeinrichtung empfängt.

Der Cloudcontroller BOB übersendet mittels seiner Funkeinrichtung seinerseits in einem Verfahrensschritt SUBMB den Punkt B an das Feldgerät ALICE, welches den Punkt B in einem Verfahrensschritt RECB mit seiner Funkeinrichtung empfängt.

Zum Übersenden des ersten Punkts A und des zweiten Punkts B kann der Funkkanal F genutzt werden, da die Kenntnis des Punkts A und des Punkts B durch den Lauscher EVE die Sicherheit des erfindungsgemäßen Verfahrens zur Vereinbarung eines gemeinsamen kryptographischen Schlüssels nicht kompromittiert. Denn der erste Punkt A und der zweite Punkt B werden nicht komplett übersendet, sondern sie werden vor dem Übersenden mit Punktkompression komprimiert.

Das Feldgerät ALICE weist eine Schlüsselberechnungseinrichtung KEYCALC auf, welche den von dem Cloudcontroller BOB empfangenen Punkt B heranzieht und den gemeinsamen kryptographischen Schlüssel K mittels Anwendung der inversen Abbildung Ψ berechnet. Dazu weist das Feldgerät ALICE eine Schlüsselberechnungseinrichtung CALCK in Gestalt eines softwaregesteuerten Prozessors auf. Die Schlüsselberechnungseinrichtung CALCK wendet die inverse Abbildung Ψ auf den vom Cloudcontroller BOB erhaltenen zweiten Punkt B an und multipliziert das Ergebnis mit der vom Feldgerät ALICE geheim gehaltenen ersten ganzen Zahl a:

$$K = a \bullet \Psi(B) = a \bullet \Psi(\Phi(b \bullet P)) = ab \bullet P,$$

d. h. das Produkt der ersten ganzen Zahl a mit dem Bild unter der inversen Abbildung Ψ des zweiten Punkts B resultiert in dem Produkt der ersten ganzen Zahl a und der zweiten ganzen Zahl b, skalar multipliziert mit dem gemeinsamen Punkt P.

Entsprechend weist auch der Cloudcontroller BOB eine Schlüsselberechnungseinrichtung CALCK auf, welche die inverse Abbildung Ψ auf den vom Feldgerät ALICE erhaltenen ersten Punkt A anwendet. Die Schlüsselberechnungseinrichtung CALCK des Cloudcontrollers BOB multipliziert das Ergebnis mit der vom Cloudcontroller geheim gehaltenen zweiten ganzen Zahl b:

$$K = b \bullet \Psi(A) = b \bullet \Psi(\Phi(a \bullet P)) = ab \bullet P,$$

d. h. der vom Cloudcontroller BOB errechnete kryptographische Schlüssel K stimmt mit dem vom Feldgerät ALICE errechneten, kryptographischen Schlüssel K überein.

Da der kryptographische Schlüssel K nie im Klartext über den Funkkanal F übermittelt worden ist und auch aus den über den Funkkanal F übermittelten komprimierten Punkten A und B nicht berechnet werden kann, eignet sich der kryptographische Schlüssel K in an sich bekannter Weise zum Verschlüsseln einer Nachricht.

Wenn im obigen Ausführungsbeispiel die isomorphe Abbildung durch eine Identitätsrelation ersetzt werden würde, d. h. wenn die zweite elliptische Kurve E mit der ersten elliptischen Kurve E' übereinstimmen würde, so würde das vorstehende Verfahren zur Vereinbarung eines gemeinsamen Schlüssels mit dem bekannten Elliptic-Curve-Diffie-Hellman-Schlüsselaustauschprotokoll zusammenfallen. Im vorliegenden Ausführungsbeispiel ist allerdings die isomorphe Abbildung Φ eine nicht-triviale, d. h. nicht-identische, Abbildung der zweiten elliptischen Kurve E auf die erste elliptische Kurve E', sodass das bekannte Elliptic-Curve-Diffie-Hellman-Schlüsselaustauschprotokoll von der vorliegenden Erfindung gerade nicht umfasst ist.

In einem weiteren Ausführungsbeispiel, welches anhand der Figuren 3 und 4 erläutert wird, wird zwar ebenfalls vom Feldgerät ALICE eine möglichst große erste ganze Zahl a ausgewählt und vom Cloudcontroller BOB eine möglichst große zweite ganze Zahl b ausgewählt.

Aber anstelle wie zuvor anhand von Fig. 1 und 2 beschrieben zunächst den ersten Punkt A auf der zweiten elliptischen Kurve E anhand einer Vervielfachung des gemeinsamen Punktes P zu bestimmen (CALCAP) und nachfolgend auf die erste elliptische Kurve E' zu transformieren (TRAFOA) wird stattdessen zunächst in einem Verfahrensschritt TRAFOP der gemeinsame Punkt P der zweiten elliptischen Kurve E mittels der isomorphen Abbildung Φ zunächst auf die erste elliptische Kurve E' abgebildet und somit in den gemeinsamen Punkt Q auf der ersten elliptischen Kurve E' überführt. Auch der Cloudcontroller BOB bildet zunächst den gemeinsamen Punkt P der zweiten elliptischen Kurve E auf die erste elliptische Kurve E' in den gemeinsamen Punkt Q mittels des Verfahrensschritts TRAFOP ab.

Nachfolgend berechnet das Feldgerät ALICE in einem Verfahrensschritt CALCAQ einen ersten Punkt A mittels Vervielfachung des gemeinsamen Punkts Q der ersten elliptischen Kurve E' mit der geheim gehaltenen ersten ganzen Zahl a als Vervielfältigungsfaktor. Der Cloudcontroller BOB berechnet seinerseits in einem Verfahrensschritt CALCBQ den zweiten Punkt B mittels Vervielfachung des gemeinsamen Punkts Q der ersten elliptischen Kurve E' mit der geheim gehaltenen zweiten ganzen Zahl b als Vervielfältigungsfaktor.

Nachfolgend übersendet das Feldgerät ALICE in einem Verfahrensschritt SUBMAQ den ersten Punkt A. Der Cloudcontroller BOB übersendet in einem Verfahrensschritt SUBMBQ den zweiten Punkt B.

Die übrigen Verfahrensschritte gleichen denen des ersten Ausführungsbeispiels wie oben beschrieben. Auch in dieser Weiterbildung der Erfindung ergibt sich der gemeinsame Schlüssel K als

$$K = b \bullet \Psi(A) = a \bullet \Psi(B) = ab \bullet P$$

und kann vom Feldgerät ALICE sowie vom Cloudcontroller BOB identisch berechnet werden.

Der Cloudcontroller BOB nutzt nun den kryptographischen Schlüssel K wie in den Figuren 2 und 4 gezeigt zur Verschlüsselung einer Nachricht in einem erfindungsgemäßen Verfahren zur verschlüsselten Kommunikation. Dazu verschlüsselt der Cloudcontroller BOB die Nachricht mit dem kryptographischen Schlüssel K in einem Verfahrensschritt ENCM, was zu einer verschlüsselten Form ME des Nachrichtentexts führt.

Der Nachrichtentext in seiner verschlüsselten Form ME wird nun im Verfahrensschritt SUBMM mittels der Funkeinrichtung des Cloudcontrollers BOB über den Funkkanal F gesendet. Das Feldgerät ALICE empfängt den Nachrichtentext in seiner verschlüsselten Form ME in einem Verfahrensschritt RECM und entschlüsselt diesen in einem Verfahrensschritt DECM.

Nicht eigens dargestellt kann selbstredend auch das Feldgerät ALICE eine mit dem gemeinsamen kryptographischen Schlüssel K verschlüsselte Nachricht an den Cloudcontroller BOB senden, die vom Cloudcontroller BOB mit dem kryptographischen Schlüssel K entschlüsselt werden kann.

**Patentansprüche**

1. Verfahren zur Vereinbarung eines gemeinsamen kryptographischen Schlüssels mit einem Kommunikationspartner (BOB) mittels mindestens eines öffentlichen Kanals (F), bei welchem ein erster Punkt (A) einer ersten elliptischen Kurve (E') gewählt (CHOA) und an den Kommunikationspartner (BOB) mittels des mindestens einen öffentlichen Kanals (F) gesendet (SUBMA, SUBMAQ) wird und ein zweiter Punkt (B) der ersten elliptischen Kurve (E') des Kommunikationspartners (BOB) empfangen (RECB) wird, wobei der gemeinsame Schlüssel mittels einer zu einer gemeinsamen isomorphen Abbildung (Φ) einer zweiten elliptischen Kurve (E) auf die erste elliptische Kurve (E') nicht-trivialen inversen gemeinsamen Abbildung (Ψ) des zweiten Punkts (B) der ersten elliptischen Kurve (E') bestimmt (CALCK) wird.

2. Verfahren nach dem vorhergehenden Anspruch, bei welchem der erste Punkt einer Punktkompression unterzogen wird, bevor er gesendet wird, und/oder eine Punktkompression des zweiten Punkts rückgängig gemacht wird, nachdem er empfangen wird.

3. Verfahren nach Anspruch 1 oder 2, bei welchem die isomorphe Abbildung (Φ) die zweite elliptische Kurve (E) auf die erste elliptische Kurve (E') nicht-trivial, d. h. nicht-identisch, abbildet und/oder die zur isomorphen Abbildung (Φ) inverse Abbildung (Ψ) die erste elliptische Kurve (E') nicht-trivial, d. h. nicht-identisch, auf die zweite elliptische Kurve (E) abbildet.

4. Verfahren nach dem vorhergehenden Anspruch, bei welchem der erste Punkt (A) das Bild unter der isomorphen Abbildung (Φ) eines mit einem ersten geheimen Faktor (a) gebildeten ersten Vielfachen eines gemeinsamen Punkts (P) der zweiten elliptischen Kurve (E) ist und bei welchem der zweite Punkt (B) das Bild unter der isomorphen Abbildung (Φ) eines mit einem zweiten geheimen Faktor (b) gebildeten zweiten Vielfachen des gemeinsamen Punkts (P) ist.

5. Verfahren nach einem der vorhergehenden Ansprüche, bei welchem der erste Punkt (A) ein mit einem ersten geheimen Faktor (a) gebildetes (CALCAQ) erstes Vielfaches des Bildes unter der isomorphen Abbildung (Φ) des gemeinsamen Punkts (P) der zweiten elliptischen Kurve (E) ist und bei welchem der zweite Punkt (B) ein mit einem zweiten geheimen Faktor (b) gebildetes (CALCBQ) Vielfaches des Bildes unter der isomorphen Abbildung (Φ) des gemeinsamen Punkts (P) der zweiten elliptischen Kurve (E) ist.

6. Verfahren nach einem der vorhergehenden Ansprüche, bei welchem der gemeinsame kryptographische Schlüssel mittels einer Multiplikation des Bildes des zweiten Punkts (B) unter der inversen Abbildung (Ψ) mit dem ersten geheimen Faktor (a) und/oder mittels einer Multiplikation des Bildes des ersten Punkts (A) unter der inversen Abbildung (Ψ) mit dem zweiten geheimen Faktor (b) bestimmt wird.

7. Verfahren zur verschlüsselten Kommunikation, bei welchem ein gemeinsamer kryptographischer Schlüssel mittels eines Verfahrens zur Vereinbarung eines gemeinsamen kryptographischen Schlüssels nach einem der vorhergehenden Ansprüche vereinbart wird und die Kommunikation mittels des kryptographischen Schlüssels oder eines aus dem kryptographischen Schlüssel abgeleiteten Schlüssels verschlüsselt (ENCM) und/oder entschlüsselt (DECM) wird.

8. Verfahren nach einem der vorhergehenden Ansprüche, welches computerimplementiert ist.

9. Computerprogrammprodukt, ausgebildet zur Ausführung eines Verfahrens nach einem der vorhergehenden Ansprüche.

10. Gerät, insbesondere IoT-Gerät (BOB) und/oder Feldgerät (ALICE), welches zur Ausführung eines Verfahrens nach einem der vorhergehenden Ansprüche eingerichtet und ausgebildet ist.

11. Gerät nach dem vorhergehenden Anspruch, aufweisend eine Punktberechnungseinrichtung (KODET), welche zur Berechnung des ersten Punkts (A) ausgebildet ist, aufweisend eine Sendeeinrichtung, welche zum Senden (SUBMA, SUBMAQ) des ersten Punkts (A) eingerichtet ist und aufweisend eine Empfangseinrichtung, welche zum Empfang (RECB) des zweiten Punkts (B) ausgebildet ist und zudem aufweisend eine Schlüsselbestimmungseinrichtung (KEYCALC), welche zur Bestimmung (CALCK) des gemeinsamen kryptographischen Schlüssels mittels des zweiten Punkts (B) ausgebildet ist.

12. Gerät nach dem vorhergehenden Anspruch, aufweisend eine Kommunikationseinrichtung, welche zum Senden (SUBMM) und/oder zum Empfang (RECM) von verschlüsselten Nachrichten (ME) ausgebildet ist und welche zur Verschlüsselung (ENCM) und/oder Entschlüsselung (DECM) mit dem gemeinsamen kryptographischen Schlüssel ausgebildet ist.

FIG 1

# FIG 2

FIG 3

# FIG 4

Europäisches
Patentamt

European
Patent Office

Office européen
des brevets

# EUROPÄISCHER RECHERCHENBERICHT

**Nummer der Anmeldung**

EP 21 15 9040

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 101 61 137 A1 (SIEMENS AG [DE]) 2. Oktober 2003 (2003-10-02) * Absatz [0070] * * Absatz [0193] - Absatz [0265] * ----- | 1-12 | INV. H04L9/08 H04L9/30 |
| A | MEYER MICHAEL ET AL: "Elliptische Kurven in der Post-Quantum-Kryptographie", MATHEMATISCHE SEMESTERBERICHTE, SPRINGER BERLIN / HEIDELBERG, BERLIN/HEIDELBERG, Bd. 66, Nr. 1, 10. Dezember 2018 (2018-12-10), Seiten 31-47, XP036723360, ISSN: 0720-728X, DOI: 10.1007/S00591-018-00239-8 [gefunden am 2018-12-10] * Seite 32 - Seite 46 * ----- | 1-12 | |

**RECHERCHIERTE SACHGEBIETE (IPC)**

H04L

Der vorliegende Recherchenbericht wurde für alle Patentansprüche erstellt

| Recherchenort | Abschlußdatum der Recherche | Prüfer |
|---|---|---|
| München | 28. Juli 2021 | Apostolescu, Radu |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)

**EP 4 050 839 A1**

**ANHANG ZUM EUROPÄISCHEN RECHERCHENBERICHT
ÜBER DIE EUROPÄISCHE PATENTANMELDUNG NR.**

EP 21 15 9040

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2021

| Im Recherchenbericht angeführtes Patentdokument | Datum der Veröffentlichung | Mitglied(er) der Patentfamilie | Datum der Veröffentlichung |
|---|---|---|---|
| DE 10161137 A1 | 02-10-2003 | KEINE | |

Für nähere Einzelheiten zu diesem Anhang : siehe Amtsblatt des Europäischen Patentamts, Nr.12/82

EPO FORM P0461

14